# EUROPEAN PATENT APPLICATION

(11) **EP 3 213 617 A1**
(43) Date of publication of application: **06.09.2017**
(21) Application number: 16197577.6
(22) Date of filing: 07.11.2016
(51) Int. Cl.: A01C 21/00, A01C 23/02, A01C 7/20

(54) **METHOD, IMPLEMENT AND SYSTEM FOR INTRODUCING MANURE INTO THE GROUND**

(30) Priority: 06.11.2015 NL 2015744
(71) Applicant: Vredo Beheer B.V., 6669 DJ Dodewaard (NL)
(72) Inventor: de Vree, Johannes, 6669 DJ Dodewaard (NL)
(74) Representative: Louwaard, Jan-Willem Paul

(57) **Abstract**

The invention relates to a method for introducing manure into the ground (17), particularly into the ground of meadowland and farmland (3), wherein a manure slit member (15) is inserted into the ground (17), a manure slit (21) is formed in the ground (17) by displacing along the ground surface (19) the manure slit member (15) inserted in the ground, and manure is introduced into the manure slit (21). In addition, the method according to the invention particularly comprises of measuring the manure slit (21) depth during displacement along the ground surface (19) of the manure slit member (15) inserted in the ground (17). The invention also relates to an implement and a system for performing the method according to the invention.

## Description

The present invention relates to a method for introducing manure into the ground, particularly into the ground of meadowland and farmland.

Farmers use manure to promote better crop growth. A known method for manuring farmland or meadowland is spreading manure or slurry over the ground surface. This is also referred to as surface manuring. A drawback of surface manuring is that the spread manure quickly leaches away and ends up in the surface water, with adverse consequences for organisms living in the surface water and also an adverse effect on the quality of the drinking water. In addition, substances such as ammonia evaporate from the spread manure quickly. These evaporated substances result in odour nuisance and are harmful to the environment. In addition to this drawback related to the environment, the spreading of manure has the drawback related to utilization that not all the spread manure comes to lie at the position where it is useful, i.e. in the ground, at the roots of the crops.

A known method whereby the drawbacks of surface manuring are reduced comprises of introducing the manure into the ground. This is also referred to as manure injection. Introducing the manure directly into the ground limits both leaching of manure, and ammonia evaporation and odour nuisance in comparison to surface manuring. In order to introduce the manure into the ground, a manure slit is formed in the ground surface in this known method by inserting a manure slit member into the ground and displacing this member along the ground surface while inserted in the ground. Manure is then introduced into the formed manure slit.

Although the latter stated known method has enabled farmers to limit both leaching of manure, and ammonia evaporation and odour nuisance in comparison to surface manuring, and also to deliver the manure to the position where it is useful, it remains important for farmers to seek further reduction of the adverse consequences of the manuring of farmland and meadowland, and further improvement of the utilization of the manure.

The present invention has for its object, among others, to improve the method of introducing manure into the ground.

The method according to the invention comprises for this purpose of measuring the manure slit depth during displacement along the ground surface of the manure slit member inserted in the ground.

The quantity of manure which can be introduced into the manure slit depends on the depth of the manure slit, i.e. the manure slit depth. During displacement along the ground surface of the manure slit member inserted in the ground, the penetration depth thereof in the ground, and thereby the depth of the formed manure slit, can vary as a result of local variations in the ground surface and local variations of the soil condition. The manure slit member can thus be moved in the direction into or in the direction out of the ground, for instance as a result of a local elevation or drop in the ground surface and accompanying local rise or fall in the ground surface, so that the penetration depth of the manure slit member, and thereby the depth of the formed manure slit, changes. The quantity of manure which can be introduced locally into the manure slit changes as a result thereof. It is also possible that the manure slit member sinks down in the direction into the ground or is conversely pressed in the direction out of the ground as a result of local changes in soil condition, for instance a local decrease or increase in density of the soil, so that the depth of the formed manure slit, and thereby the quantity of manure which can be introduced locally into the manure slit, changes.

Measuring the manure slit depth in accordance with the method according to the invention during displacement along the ground surface of the manure slit member inserted in the ground, i.e. during forming of the manure slit, makes it possible to monitor the manure slit depth, and thereby the quantity of manure which the manure slit is able to contain, on the basis of measurement data resulting from measurement of the manure slit depth, and to optionally undertake action to reduce the adverse consequences of the manuring.

If during introduction of manure into the ground a plurality of parallel manure slits are formed simultaneously by inserting a plurality of adjacently positioned manure slit members into the ground and displacing these manure slit members which have been inserted into the ground jointly along the ground surface, the manure slit depth can be measured for each individual manure slit member. Alternatively, the manure slit depth is measured for one or for some of the total number of manure slit members, for instance in each case for one manure slit member per 2, 3, 4 or 5 manure slit members. Although the manure slit depth is not measured for each manure slit member in this alternative case, measurement of the manure slit depth of one or a number of the manure slit members can produce sufficiently accurate data, depending on the specific object of measurement of the manure slit depth. In the method according to the invention at least one manure slit member is thus inserted into the ground and moved along the ground surface, and for at least one manure slit member the depth of the manure slit formed thereby is measured.

In a preferred embodiment of the method according to the invention measurement of the manure slit depth comprises of measuring the penetration depth of the manure slit member inserted in the ground during displacement along the ground surface of the manure slit member inserted in the ground. The manure slit depth is directly determined by the penetration depth of the manure slit member whereby the manure slit is formed. The penetration depth of the manure slit member is thereby a measure for the manure slit depth of the manure slit formed by means of the manure slit member. The manure slit depth is alternatively for instance measured by inserting a separate measuring member into the formed manure slit and thereby measuring the depth of the manure slit.

Measurement of the manure slit depth during displacement along the ground surface of the manure slit member inserted in the ground preferably takes place continuously. This makes it possible to monitor the depth of the manure slit particularly precisely. Measurement of the manure slit depth during displacement along the ground surface of the manure slit member inserted in the ground alternatively takes place periodically. For instance each time after a displacement over the ground surface of a predetermined distance, or each time after a predetermined time period. A periodic measurement of the manure slit depth can for instance be useful if a continuous measurement is not necessary for the type of action taken on the basis of the measurement data resulting from measurement of the manure slit depth.

In a preferred embodiment of the method according to the invention the measurement data resulting from measurement of the manure slit depth are stored. This makes it possible to evaluate the progression of the manure slit depth after manuring. The stored measurement data may thus show that the manure slit depth was structurally smaller than determined and set beforehand. If the manure dosage depends on the preset manure slit depth or penetration depth of the manure slit member, the structurally smaller manure slit depth results in overfilling of the manure slit. The excess manure, i.e. the manure which cannot be introduced into the manure slit, remains on the ground surface. This excess manure quickly leaches away, and ammonia evaporates therefrom quickly. The manure which cannot be introduced into the manure slit is moreover utilized less efficiently.

The farmer can for instance decide on the basis of these measurement data to henceforth increase the preset manure slit depth or penetration depth of the manure slit member or to reduce the preset manure dosage, so that excess manure is avoided in the future. If the stored measurement data had shown that the manure slit depth was structurally greater than determined and set beforehand, and thereby resulted in underfilling of the manure slit, the farmer can for instance decide to henceforth reduce the preset manure slit depth or penetration depth of the manure slit member or to increase the preset manure dosage, so that the manure slit is filled more effectively and the manuring is thereby more effective.

The stored measurement data can also be used by the farmer to demonstrate to public authority inspectors that the farmer complies with government-set regulations in respect of manuring the ground.

In a further favourable embodiment of the method according to the invention the geographical location of the manure slit member is determined periodically or continuously during displacement along the ground surface of the manure slit member inserted in the ground, and the geographical data resulting from the determination of the geographical location are associated with the measurement data resulting from measurement of the manure slit depth.

Owing to the geographical data associated with the measurement data of the manure slit depth measurement it is possible to evaluate the progression of the manure slit depth on the basis of the geographical data.

The stored measurement data can thus show that the manure slit depth is greater or smaller at a specific location than the predetermined and preset manure slit depth or penetration depth of the manure slit member, while at other locations the manure slit depth is equal to the predetermined and preset manure slit depth or penetration depth of the manure slit member. The geographical data of the specific location can be ascertained by means of the geographical data associated with the depth measurement data. The farmer can for instance decide on the basis of the depth measurement data and the geographical data associated therewith to change the preset manure slit depth or penetration depth of the manure slit member or to change the preset manure dosage, so that excess manuring due to overfilling of the manure slit or insufficient manuring due to underfilling of the manure slit is avoided. In addition, it is possible to analyse the soil condition on the basis of data relating to the progression of the manure slit depth.

In a favourable embodiment thereof, the measurement data resulting from measurement of the manure slit depth are stored together with the associated geographical data resulting from the determination of the geographical location. The farmer can then evaluate the progression of the manure slit depth on the basis of the geographical data after manuring.

The farmer can for instance decide on the basis of the depth measurement data and the geographical data associated therewith to henceforth change the preset manure slit depth or penetration depth of the manure slit member, or to change the preset manure dosage, at the specific location so that excess manuring due to overfilling of the manure slit or insufficient manuring due to underfilling of the manure slit at the specific locations is avoided in the future.

It is also the case in this embodiment that the depth measurement data and the geographical data associated therewith can be used by the farmer to demonstrate to public authority inspectors that the farmer complies with government-set regulations in respect of manuring the ground.

Associating the geographical data with the depth measurement data can take place immediately when the depth measurement data are obtained. The geographical data and depth measurement data are alternatively associated with each other afterward on the basis of the stored geographical data and depth measurement data. This is for instance possible if time recording data are coupled to both forms of data.

In a favourable embodiment of the method according to the invention, wherein geographical data are associated with the depth measurement data, the measurement data resulting from measurement of the manure slit depth are displayed on a geographical representation of the ground surface on the basis of the geographical data associated with the depth measurement data.

The display of the depth measurement data on a geographical representation of the ground surface, such as a map on a screen, aids in a rapid evaluation of the progression of the manure slit depth. The manure slit depth or deviations from the manure slit depth relative to the set manure slit depth or penetration depth of the manure slit member can be displayed on the geographical representation in favourable manner by means of a colour gradient. Display of the depth measurement data can take place immediately after the depth measurement data have been obtained, or afterward, i.e. after manuring, if the depth measurement data and the geographical data associated therewith are stored.

In a further favourable embodiment of the method according to the invention, during displacement along the ground surface of the manure slit member inserted in the ground the penetration depth of the manure slit member inserted in the ground is adjusted subject to measurement data resulting from measurement of the manure slit depth.

Adjusting the penetration depth of the manure slit member subject to the depth measurement data during displacement along the ground surface of the manure slit member for instance makes it possible to compensate immediately, in the case of an increase or reduction of the manure slit depth as a result of variations in the ground surface or the soil condition, by means of displacing the manure slit member in the direction into the ground or in the direction out of the ground. Such an adjustment can for instance be realized by comparing each measurement value resulting from measurement of the manure slit depth to a predetermined and preset value for the manure slit depth or penetration depth of the manure slit member.

The predetermined and preset value for the manure slit depth or penetration depth of the manure slit member can be a constant value for the whole ground surface to be manured. In the case of a constant manure dosage it can thus be realized that the depth of the manure slit in each case suffices for the set manure dosage, thus avoiding excess and insufficient manure. The desired value can also be a value which depends on the specific location on the surface to be manured. As an alternative to adjusting the penetration depth of the manure slit member inserted in the ground subject to measurement data resulting from measurement of the manure slit depth, it is also possible during displacement along the ground surface of the manure slit member inserted in the ground to compare the measurement data resulting from measurement of the manure slit depth to a preset desired value for the manure slit depth or penetration depth of the manure slit member, and to generate an alarm signal if the measurement data resulting from measurement of the manure slit depth exhibit a predetermined deviation from the preset desired value for the manure slit depth or penetration depth of the manure slit member.

According to a favourable embodiment of the method according to the invention, the method comprises of obtaining data relating to the quantity of manure which is introduced into the manure slit, and during displacement along the ground surface of the manure slit member inserted in the ground the penetration depth of the manure slit member inserted in the ground is adjusted subject to the quantity of manure which is introduced into the manure slit and the measurement data resulting from measurement of the manure slit depth. Using an algorithm or a table it is possible to establish for a manure slit member with a determined geometry what the volume of a manure slit formed by means of the manure slit member is at a determined manure slit depth or penetration depth of the manure slit member. A desired manure slit depth or penetration depth of the manure slit member can then be determined by means of such an algorithm or such a table, on the basis of data relating to the quantity of manure which is introduced into the manure slit, so as to avoid overfilling and/or underfilling of the manure slit. Comparing this desired value of the manure slit depth or penetration depth of the manure slit member to measurement data resulting from measurement of the manure slit depth makes it possible, in the case of a determined deviation between the desired manure slit depth or penetration depth of the manure slit member and the measured manure slit depth or penetration depth of the manure slit member, to adjust the penetration depth of the manure slit member inserted in the ground so as to avoid overfilling and optionally underfilling of the manure slit. As an alternative to thus adjusting the penetration depth of the manure slit member subject to data relating to the quantity of manure which is introduced into the manure slit, it is also possible to generate an alarm signal in the case of a determined deviation between the desired manure slit depth or penetration depth of the manure slit member and the measured manure slit depth or penetration depth of the manure slit member. An operator of a device for manuring with which the method according to the invention is performed can for instance adjust the manure slit depth or penetration depth of the manure slit member on the basis of such an alarm signal.

According to a favourable embodiment of the method according to the invention, wherein the penetration depth of the manure slit member inserted in the ground is adjusted subject to the quantity of manure which is introduced into the manure slit, the method comprises of obtaining data relating to the composition of the manure which is introduced into the manure slit, this in addition to obtaining data relating to the quantity of manure which is introduced into the manure slit, the manure dosage is adjusted subject to the data relating to the composition of the manure which is introduced into the manure slit, and the penetration depth of the manure slit member inserted in the ground is adjusted subject to the manure dosage and the measurement data resulting from measurement of the manure slit depth. It is particularly favourable to obtain data relating to the nitrogen content and/or the phosphate content of the manure which is introduced into the manure slit. It is thus for instance favourable to set a desired quantity of nitrogen or phosphate to be introduced and to adjust the manure dosage subject to the measurement data obtained from the measurements relating to the composition of the manure to be introduced, so that the desired quantity of nitrogen or phosphate is dispensed. Adjusting herein the penetration depth of the manure slit member inserted in the ground subject to the manure dosage and the measurement data resulting from measurement of the manure slit depth makes it possible to adjust the manure slit depth to the manure dosage, so that overfilling of the manure slit is avoided when the quantity of manure introduced in order to obtain the desired quantity of introduced nitrogen or phosphate increases, and, optionally, underfilling of the manure slit is avoided when the quantity of manure introduced in order to obtain the desired quantity of introduced nitrogen or phosphate decreases. Data relating to the composition of the manure are obtained in favourable manner by means of an NIR (Near-Infrared) sensor.

In an alternative favourable embodiment of the method according to the invention, during displacement along the ground surface of the manure slit member inserted in the ground the quantity of manure which is introduced into the manure slit is adjusted subject to measurement data resulting from measurement of the manure slit depth.

Adjusting the manure dosage subject to the depth measurement data during displacement along the ground surface of the manure slit member for instance makes it possible to compensate immediately, in the case of an increase or reduction of the manure slit depth as a result of variations in the ground surface or the soil condition, by means of increasing or decreasing the introduced quantity of manure. Such an adjustment can for instance be realized by calculating in each case, on the basis of the measurement value resulting from measurement of the manure slit depth, the quantity of manure necessary to provide the manure slit with a desired degree of filling, and then adjusting the dosage of the manure such that the desired degree of filling results. Excess and insufficient manure dosing, in other words overfilling and underfilling of the manure slit, can thus be avoided.

The measure of adjusting the manure dosage subject to the depth measurement data can serve as an alternative to adjusting the penetration depth, or as an addition thereto. As an additional measure, this measure can favourably be applied if the desired value for the manure slit depth depends on the specific location on the ground surface to be manured. A desired decrease or increase of the penetration depth during manuring then results in a direct adjustment of the introduced quantity of manure, this resulting in a desired degree of filling. Excess and insufficient manure dosing, in other words overfilling and underfilling of the manure slit, can thus be avoided.

In a further favourable embodiment of the method according to the invention the method additionally comprises of obtaining data relating to the quantity of manure which is introduced into the manure slit, and of associating the data relating to the quantity of manure which is introduced into the manure slit with the measurement data resulting from measurement of the manure slit depth.

Owing to the data relating to the quantity of manure introduced into the manure slit which are associated with the measurement data of the depth measurement it is possible to evaluate the degree of filling of the manure slit on the basis of the combination of depth measurement data and data relating to the introduced quantity of manure and to optionally undertake action to reduce the adverse consequences of manuring.

The data relating to the introduced quantity of manure can be data about the setting of manure dosage or be data from a measurement of the quantity of dosed manure. In a favourable embodiment thereof, the measurement data resulting from measurement of the manure slit depth are stored together with the associated data relating to the quantity of manure introduced into the manure slit. The farmer can then evaluate the progression of the manure slit depth and the manure dosage after manuring.

In this embodiment it is also the case that the depth measurement data and the associated data relating to the quantity of manure introduced into the manure slit can be used by the farmer to demonstrate to public authority inspectors that the farmer complies with government-set regulations in respect of manuring the ground.

Associating the data relating to the quantity of manure introduced into the manure slit with the depth measurement data can take place immediately when the depth measurement data are obtained. Data relating to the quantity of manure introduced into the manure slit and depth measurement data are alternatively associated with each other afterward on the basis of the stored data. This is for instance possible if time recording data are coupled to both forms of data.

In a favourable embodiment of the method according to the invention, wherein geographical data and data relating to the quantity of manure which is introduced into the manure slit are associated with the depth measurement data, this method also comprises of displaying the data relating to the quantity of manure which is introduced into the manure slit on a geographical representation of the ground surface.

Display of the data relating to the quantity of manure which is introduced into the manure slit on a geographical representation of the ground surface, such as map on a screen, aids in a rapid evaluation of the progression of the manure dosage.

The data relating to the quantity of manure which is introduced into the ground can be displayed on the geographical representation in favourable manner by means of a colour gradient. Display of the data relating to the quantity of manure which is introduced into the ground can take place immediately after the data have been obtained, or afterward, i.e. after manuring, if the data are stored.

In a further favourable embodiment of the method according to the invention, wherein data relating to the introduced quantity of manure are obtained and associated with the depth measurement data, the degree of filling of the manure slit is calculated on the basis of the measurement data from measurement of the manure slit depth and the associated data relating to the quantity of manure which is introduced into the manure slit. The degree of filling is the ratio of the quantity of manure which is introduced into the manure slit and the quantity of manure which a manure slit with the relevant manure slit depth can contain.

The degree of filling directly shows an underfilling or overfilling of the manure slit, so that evaluation of the manuring can take place in simple manner. The degree of filling is stored in favourable manner and can likewise be displayed on a geographical representation of the ground surface, such as a map on a screen, for instance by means of a colour gradient.

In a further favourable embodiment of the method according to the invention, wherein data relating to the introduced quantity of manure are obtained and associated with the depth measurement data, the method comprises of obtaining data relating to the composition of the manure which is introduced and of associating the data relating to the composition of the manure which is introduced with the introduced quantity of manure and the depth measurement data. Data relating to the introduced quantity of manure, composition of the manure and manure slit depth can thus be evaluated, stored and/or displayed in a geographical representation of the ground surface in combination. Data relating to the composition of the manure are obtained in favourable manner by means of an NIR (Near-Infrared) sensor.

The present invention also relates to an implement for introducing manure into the ground, with a frame displaceable along the ground surface, a manure slit member which is arranged on the frame and can be inserted into the ground for forming a manure slit during displacement of the frame in an operating direction, and an outflow opening, positioned behind the manure slit member in operating direction, of a manure dosing device for introducing manure into the manure slit.

Such an implement is for instance known as so-called slurry injector. Such a slurry injector provides a row of adjacently positioned manure slit members, wherein each member comprises two coulter wheels which are oriented in V-shape relative to each other, which can be inserted with the point of the V-shape into the ground, and which form a V-shaped manure slit in the ground during displacement along the ground surface. An outflow opening of a manure dosing device, whereby manure can be introduced into the V-shaped manure slit, is positioned behind the coulter wheels as seen in the direction of forward movement.

The implement according to the invention is characterized by a measuring device for measuring the manure slit depth. The method according to the invention can be performed by means of the implement according to the invention, wherein the depth of the manure slit formed by the manure slit member arranged on the frame can be measured during displacement of the frame along the ground surface, so that the above described favourable effects of the method according to the invention can be achieved.

Although the implement according to the invention can be embodied in particularly favourable manner on the basis of a known slurry injector, the implement can also be embodied differently, for instance as slit coulter slurry injector, wherein the manure slit member does not comprise two coulter wheels in V-shaped formation but a single slit-forming blade, also referred to as coulter.

In the case that the implement according to the invention is provided with a plurality of adjacently positioned manure slit members it is possible to displace the manure slit members jointly along the ground surface after the manure slit members have been inserted into the ground, and thus simultaneously form a plurality of parallel manure slits and introduce manure therein. In a thus embodied implement according to the invention a depth measuring device can be provided for each individual manure slit member in order to measure the manure slit depth for each individual manure slit member. Alternatively, not all the manure slit members are provided with a depth measuring device. It is thus for instance possible for only one of the manure slit members to be provided with a depth measuring device. It can also be the case that, distributed among the total number of manure slit members, a smaller number of manure slit members is provided with a depth measuring device, for instance in each case one manure slit member per 2, 3, 4 or 5 manure slit members. Although the manure slit depth is not measured for each formed manure slit in the case that not all the manure slit members are provided with a depth measuring device, measurement of the manure slit depth for one or a number of the manure slit members can produce sufficiently accurate data, depending on the specific object of measurement of the manure slit depth. The implement according to the invention thus comprises at least one manure slit member and a depth measuring device for measurement of the manure slit depth for at least one manure slit member.

In a preferred embodiment of the method according to the invention the depth measuring device is configured to measure the penetration depth of the manure slit member inserted in the ground during displacement along the ground surface of the manure slit member introduced in the ground. The manure slit depth is directly determined by the penetration depth of the manure slit member whereby the manure slit is formed. The penetration depth of the manure slit member is thereby a measure for the manure slit depth of the manure slit formed by means of the manure slit member. The depth measuring device is alternatively configured to measure the manure slit depth by means of a separate measuring member, for instance a measuring member which is inserted into the formed manure slit in order to measure the depth of the manure slit.

In a favourable embodiment of the implement according to the invention the measuring device comprises a ground contact member which is arranged on the frame, which can be brought into contact with the ground surface and which is displaceable over the ground surface during displacement of the frame along the ground surface, wherein the ground contact member is displaceable relative to the manure slit member during insertion of the manure slit member into the ground, and the depth measuring device also comprises a sensor for measuring the displacement of the ground contact member relative to the manure slit member.

Using the ground contact member displaceable over the ground surface, the ground surface can be used in simple and reliable manner as reference plane for measuring the penetration depth of the manure slit member.

Such a ground contact member can be embodied in favourable manner by means of a running wheel or a slide plate. This makes the measuring device simple and moreover robust. Positioning the ground contact member close to the manure slit member, preferably adjacently of the ground contact member as seen transversely of the operating direction, enables a precise and reliable measurement of the penetration depth of the manure slit member. In a known implement such as the slurry injector the ground contact member can be positioned between adjacent manure slit members, and the ground contact member is preferably in contact with the ground surface at the position of the lowest point of the V-shaped formation of the coulter wheels.

Although a depth measuring device with a ground contact member can be applied particularly favourably in a slurry injector, such a depth measuring device can also be applied in differently embodied implements with a manure slit member to be inserted into the ground for forming a manure slit.

In a further favourable embodiment of the implement according to the invention the manure slit member is arranged on the frame by means of a first pivot arm which is arranged on the frame for rotation around a pivot axis, the ground contact member is arranged on the frame by means of a second pivot arm which is arranged on the frame for rotation around the pivot axis, and the sensor is configured to measure the difference between the angular displacement of the first pivot arm and the angular displacement of the second pivot arm around the pivot axis.

With this combination of measures the measuring device for measuring the penetration depth of the manure slit member can be embodied in particularly favourable manner if a pivotable suspension of the manure slit member is provided. Such a suspension of the manure slit member is favourable for giving the manure slit member the option to move upward, for instance if there is a rock in the ground, in order to avoid damage to the manure slit member.

If use is made of a row of manure slit members positioned mutually adjacently transversely of the direction of forward movement over the ground surface, such a suspension enables independent movement of the individual members relative to each other. In such a suspension the pivot arm is generally biased in the direction of the ground surface under the influence of spring force.

In a further favourable embodiment of the implement according to the invention with a depth measuring device with a ground contact member the implement is also provided with a wear measuring device for measuring wear of the manure slit member.

When measuring using a ground contact member, the actual penetration depth will be smaller than the measured penetration depth due to wear of the manure slit member, if the depth measuring device was calibrated when the manure slit member was taken into use. Measuring the wear of the manure slit member makes it possible to compensate for the deviation resulting from the wear of the manure slit member. Alternatively, the measuring device must be calibrated periodically.

In a favourable embodiment of the method according to the invention the manure slit member comprises at least one coulter wheel and the wear measuring device is configured to measure the change in diameter of the coulter wheel.

In the case that the manure slit member comprises a coulter wheel, such as in the case of for instance a slurry injector, measuring the change in diameter of the coulter wheel is an effective way of determining the wear which influences the penetration depth measurement.

In a favourable embodiment thereof, the wear measuring device comprises an inductive sensor arranged close to the cutting edge of the coulter wheel. The change in diameter of the coulter wheel can be determined in effective manner on the basis of measurement data of such a sensor.

The present invention also relates to a system for introducing manure into the ground. The system comprises an implement according to the invention as described above and a processing unit connected to the depth measuring device for processing measurement data provided by the depth measuring device. Depth measurement data generated by the depth measuring device can be processed using the processing unit.

The processing unit enables the depth measurement data generated by the depth measuring device to for instance be made suitable for storage, be associated with other data or be processed into commands, for instance for parts of the implement. The processing unit can be arranged on the implement, but can also be arranged on a work vehicle carrying the implement and moving forward over the ground.

In a favourable embodiment of the system according to the invention this system comprises a location determining device connected to the processing unit for determining the geographical location of the implement, wherein the processing unit is also configured to process geographical data provided by the location determining device.

These measures for instance enable the depth measurement data to be associated with geographical data, as described above in respect of a favourable embodiment of the method according to the invention. The location determining device is for instance a device based on GPS (Global Positioning System).

In a further favourable embodiment of the system according to the invention the system comprises a storage unit for storing data processed by the processing unit. The storage unit enables storage of processed data for use at a later time.

In a further favourable embodiment of the system according to the invention the system comprises an actuator for displacing the manure slit member in order to insert the manure slit member into the ground, wherein the actuator is connected to the processing unit and the processing unit is configured to control the actuator in order to adjust the penetration depth of the manure slit member in the ground subject to measurement data provided by the depth measuring device.

With a thus embodied system it is possible to perform the above described favourable embodiment of the method according to the invention, wherein the penetration depth is adjusted subject to measurement data obtained from measurement of the manure slit depth. The actuator can be arranged on the implement, but can also be arranged on a work vehicle carrying the implement and moving forward over the ground.

The actuator can be positioned between the frame and the manure slit member arranged thereon so as to displace the manure slit member relative to the frame. The actuator can alternatively be positioned between the frame and a work vehicle carrying the implement and moving forward over the ground in order to displace the frame with the manure slit member thereon relative to the work vehicle. If a plurality of manure slit members are arranged on the frame, the manure slit members are then displaced simultaneously. When the actuator is positioned between the frame and the manure slit member, individual displacement, and thereby individual adjustment, of the penetration depth is possible.

In a further favourable embodiment of the system according to the invention the dosing device of the implement comprises a dosing member for dosing the quantity of manure which is introduced into the manure slit by the dosing device, wherein the dosing member is connected to the processing unit and wherein the processing unit is configured to control the dosing member in order to adjust the quantity of manure which is introduced into the manure slit by the dosing device subject to the measurement data provided by the depth measuring device.

With a thus embodied system it is possible to perform the above described favourable embodiment of the method according to the invention, wherein the manure dosage is adjusted subject to measurement data obtained from measurement of the penetration depth.

In a further favourable embodiment of the system according to the invention the dosing device of the implement comprises a sensor configured to detect the composition of the manure, particularly to detect the nitrogen content and/or the phosphate content, this sensor being connected to the processing unit. A favourable sensor is an NIR (Near-Infrared) sensor.

The present invention is further elucidated hereinbelow on the basis of exemplary embodiments which are shown schematically in the accompanying figures. These are non-limitative exemplary embodiments. In the figures:
- figure 1 shows a perspective view of a part of an implement according to the invention in combination with a top view of a plot of meadowland or farmland 3;
- figures 2 and 3 show a perspective view of a manure slit member of the implement of figure 1;
- figures 4-6 show schematic side views of the manure slit member of figures 1 and 2 as part of a system according to the invention;
- figure 7 shows a schematic side view of a measuring device for wear of a manure slit member as optional part of a system according to the invention;
- figure 8 shows a top view of the plot of land of figure 1 with a representation of the progression of the manure slit depth;
- figure 9 shows a favourable embodiment of the system of figures 4-6; and
- figure 10 shows a further favourable embodiment of the system of figures 4-6.

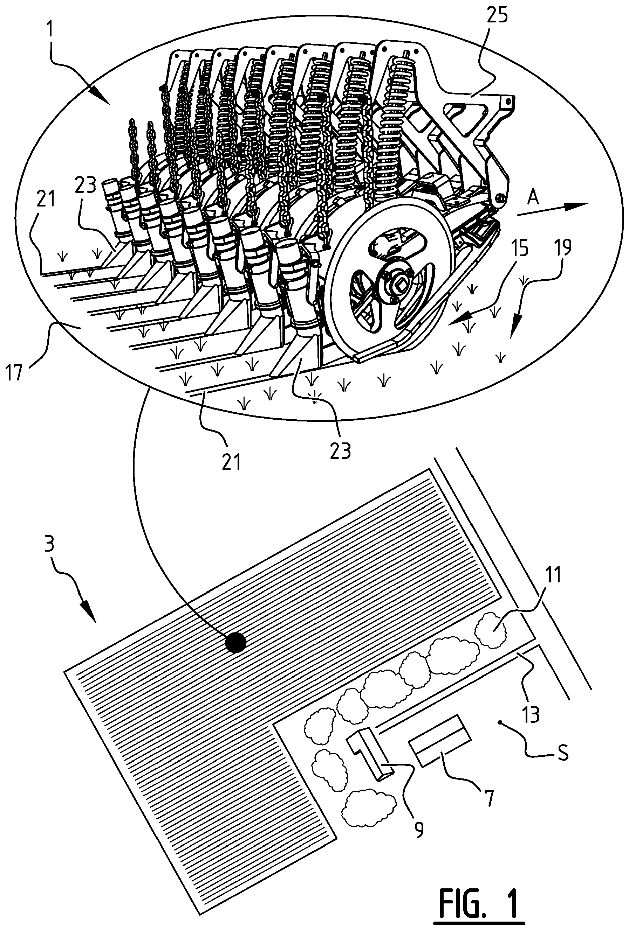

Figure 1 shows a perspective view of a part of an implement 1 and a top view of a plot of meadowland or farmland 3. The top view is a geographical representation of plot of land 3, on which a farmyard 5 with a farm 7, a barn 9, vegetation 11 and a road 13 thereon is also shown in addition to the meadowland or farmland.

Implement 1 comprises a plurality of manure slit members 15 positioned mutually adjacently at a distance from each other and having been inserted partially into the ground 17 of a plot of meadowland or farmland 3 in the shown situation. During displacement of manure slit members 15 over ground surface 19 in the operating direction A, a manure slit 21 which is open to the top is formed in ground 17 by means of each manure slit member 15. An outflow funnel 23 of a manure dosing device is positioned behind each manure slit member 15 as seen in operating direction A. Manure is introduced via outflow funnels 23 into manure slits 21 by means of the manure dosing device during displacement of manure slit members 15 over ground surface 19 in the operating direction A.

Manure slit members 13 are arranged on a shared frame (not shown) by means of mounting brackets 25. This frame can be provided with wheels whereby the frame is displaceable over ground surface 19. The frame can in that case form part of a self-propelling work vehicle or be drawn as a trailer by means of a self-propelling work vehicle.

The frame can alternatively be embodied without wheels and be configured to be carried by a work vehicle which then displaces the frame and the manure slit members arranged thereon over the ground surface. Further parts of the manure dosing device are also arranged on the frame, including a manure storage tank and a dosing unit which doses manure from the manure storage tank into the respective outflow funnels 23.

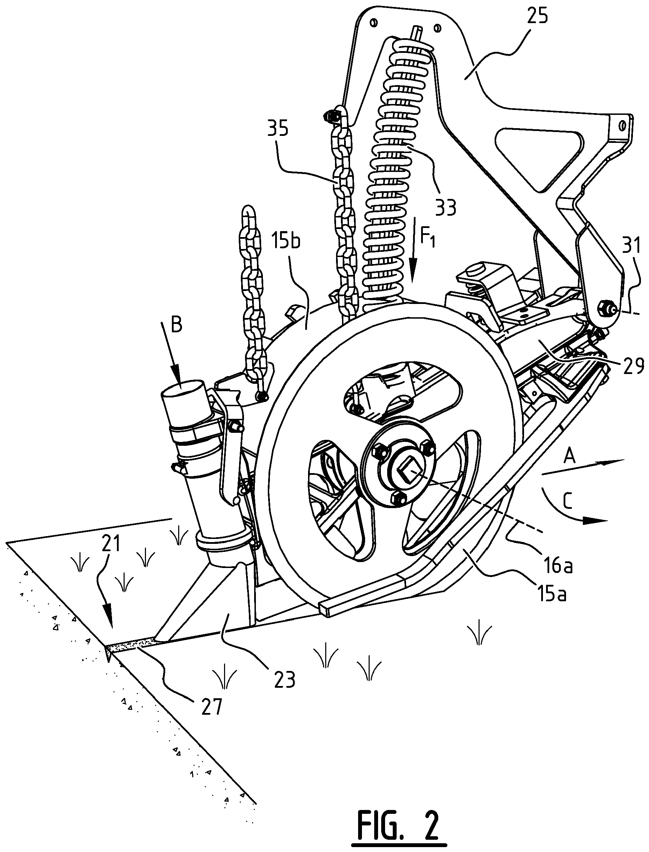

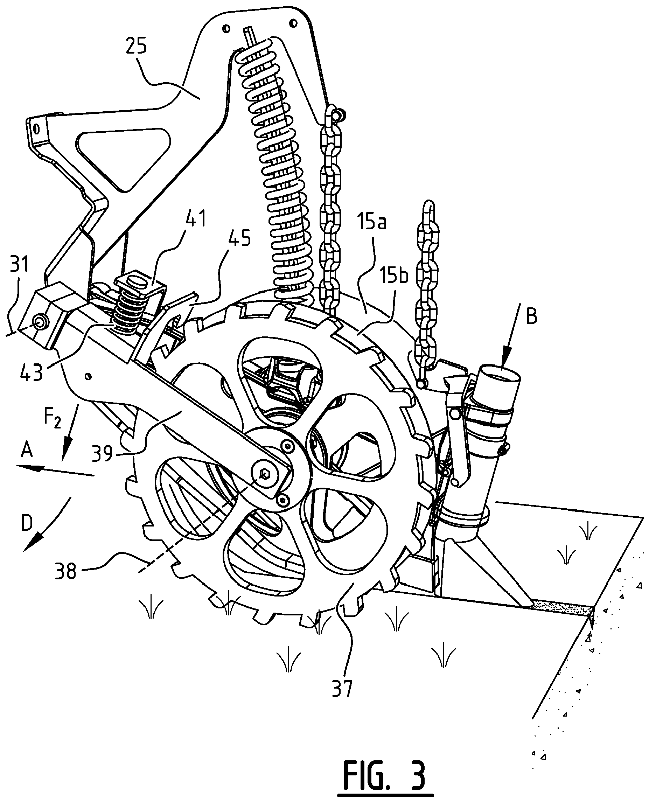

Figures 2 and 3 show a single manure slit member 15 in more detail. Manure slit member 15 comprises two coulter wheels 15a and 15b which are positioned in a V-shaped formation relative to each other, wherein the point of the V-shape, where the coulter wheels come together, is directed downward, i.e. is directed toward the ground 5. In the situation shown in figures 2 and 3 the part of manure slit member 15 where the two coulter wheels 15a, 15b come together has been inserted into the ground 5, so that a V-shaped manure slit 21 which is open to the top is formed during forward movement of manure slit member 15 in the operating direction A. During forward movement of manure slit member 15 over ground surface 19 in operating direction A, manure 27 is dosed in the direction of arrow B into outflow funnel 23 by means of a dosing unit (not shown) of a manure dosing device. This manure flows via outflow funnel 23 into manure slit 21 so that manure is introduced into the manure slit.

Manure slit member 15 and outflow funnel 23 are arranged on a pivot arm 29. Coulter wheels 15a, 15b are in particular arranged on pivot arm 29 for rotation around a respective rotation axis 16a, 16b. Figures 2 and 3 only show rotation axis 16a. Pivot arm 29 is connected to mounting bracket 25 for rotation around a rotation axis 31 so that coulter wheels 15a, 15b and outflow funnel 23 are displaceable around rotation axis 31 relative to mounting bracket 25 and relative to the frame on which mounting bracket 25 is mounted. A helical spring 33 and a chain 35 are arranged between pivot arm 29 and mounting bracket 25, at a distance from rotation axis 31. Helical spring 33 exerts a pressure force F₁ on pivot arm 29 so that mounting bracket 25 is forced in the direction of arrow C about rotation axis 31. Chain 35 limits displacement of pivot arm 29 about rotation axis 31.

A ground contact member embodied as running wheel 37 is positioned adjacently of manure slit member 15. This running wheel 37 is arranged on second pivot arm 39 for rotation around rotation axis 38. Second pivot arm 39 is arranged on mounting bracket 25 for rotation around rotation axis 31. Running wheel 37 is arranged by means of a second pivot arm 39 on mounting bracket 25 for rotation around rotation axis 31 and is thereby displaceable around rotation axis 31 relative to the frame on which mounting bracket 25 is mounted. A helical spring 43 is arranged between second pivot arm 39 and a bracket 41 arranged on first pivot arm 29, at a distance from rotation axis 31. Helical spring 43 exerts a pressure force F₂ on pivot arm 29 so that mounting bracket 25 is forced in the direction of arrow D about rotation axis 31 relative to first pivot arm 29. A stop bracket 45 arranged on second pivot arm 39 limits displacement of second pivot arm 39 about rotation axis 31 in the direction of arrow D relative to first pivot arm 29.

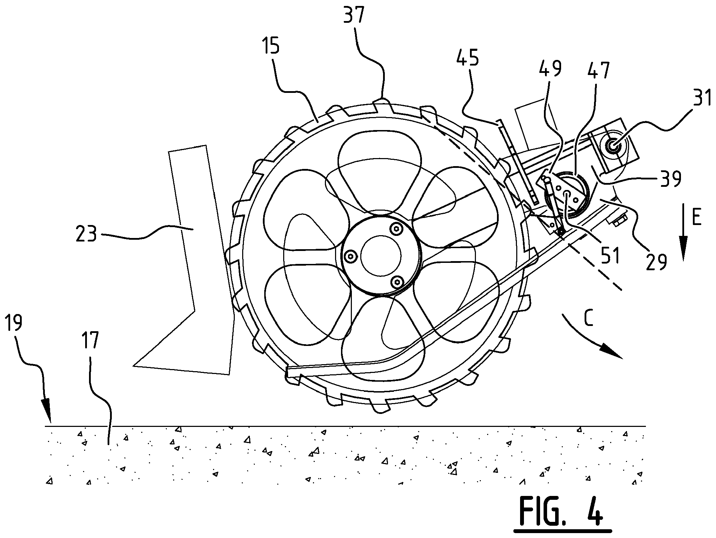

Running wheel 37 and second pivot arm 39 are part of a measuring device for measuring the penetration depth of manure slit member 15, particularly coulter wheels 15a, 15b, in ground 17 as a measure for the manure slit depth of a manure slit formed by means of the manure slit member. The operation thereof is described in the following with reference to figures 4-7.

As shown schematically in figures 4-7, a rotation sensor 45 is arranged between first pivot arm 29 and second pivot arm 39. This rotation sensor 45 comprises a sensor unit 47 which is mounted on second pivot arm 39. A sensor arm 49 is mounted at a first end thereof on sensor unit 47 for rotation about rotation axis 51 and is connected at a second end thereof to first pivot arm 29 by means of a connecting rod 53.

Figure 4 shows that manure slit member 15 is positioned above ground surface 19. Neither coulter wheels 15a, 15b of manure slit member 15 nor running wheel 37 are in contact with ground surface 19. In this situation the helical spring 43 between first pivot arm 29 and second pivot arm 39 shown in figures 2 and 3 pushes second pivot arm 39 in the direction of arrow D relative to first pivot arm 29, and stop bracket 45 is in contact with first pivot arm 29. During displacement of running wheel 37 and coulter wheels 15a and 15b in the direction of arrow E, for instance by displacement in the direction of arrow E of the frame on which they are arranged, running wheel 37 and coulter wheels 15a, 15b come into contact with ground surface 19.

During further displacement of the frame in the direction of arrow E the coulter wheels 15a, 15b are pressed into ground 17 if there is sufficient pressure force, while running wheel 37 remains positioned on the ground surface 19. This latter is possible in that second pivot arm 39 is rotated about rotation axis 31 counter to the action of helical spring 43, in the direction G, relative to first pivot arm 29.

As a result of the rotation of second pivot arm 39 about rotation axis 31 relative to first pivot arm 29, first pivot arm 29 and second pivot arm 39 move relative to each other. This displacement results in a rotation of sensor arm 49 about rotation axis 51. Sensor unit 47 is configured to detect this rotation of sensor arm 49 and to provide a measurement value which is subject to the rotation of sensor arm 49 about rotation axis 51.

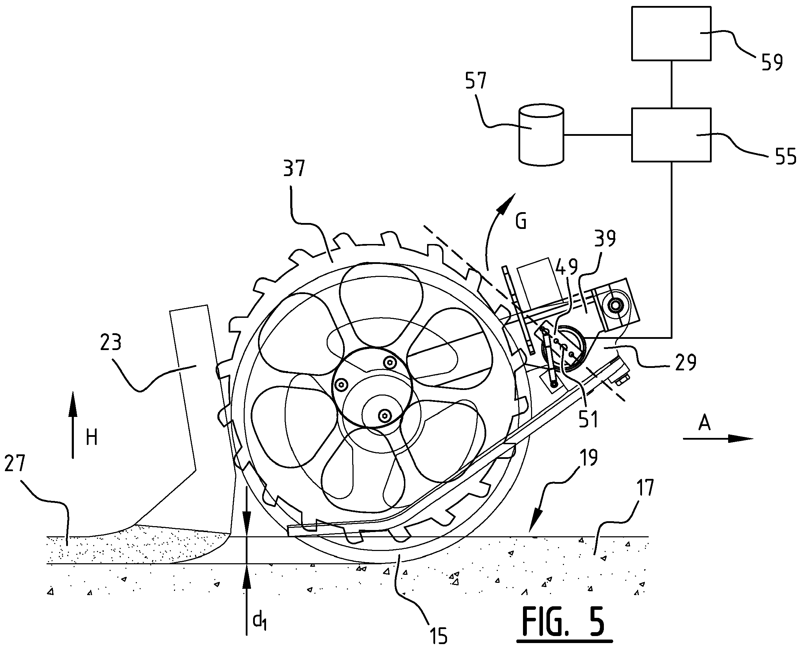

Sensor unit 47 is connected to a processing unit 55. The displacement of second pivot arm 39 relative to first pivot arm 29 between the situation shown in figure 4 and the situation shown in figure 5 is subject to the penetration depth d₁ of manure slit member 15. The difference between the values provided by sensor unit 47 in the situation shown in figure 4 and the situation shown in figure 5 is a measure for the penetration depth d₁.

Processing unit 55 is configured to determine the penetration depth d₁ on the basis of measurement values provided by sensor unit 47. As shown in figure 5, processing unit 55 is connected to a storage unit 57 in which the penetration depth d₁ determined by processing unit 55 is stored.

Processing unit 55 and implement 1, of which manure slit member 15 is a part, together form a system according to the invention.

During displacement of manure slit member 15 in the direction of arrow A, wherein manure slit 21 is formed and manure 27 is introduced into manure slit 21, processing unit 55 periodically determines the penetration depth d and stores this value in storage unit 57. As shown in figure 5, processing unit 55 is also connected to a GPS-based location determining unit 59 whereby the geographical location of implement 1 can be determined. Processing unit 55 is configured to associate geographical data provided by location determining unit 59 with, or couple these data to, data relating to the penetration depth d and to store these data relating to the penetration depth d and the geographical data associated therewith in storage unit 57. If necessary, processing unit 55 can be set up to correct the geographical data received from location determining unit 59 for the difference between the location of the antenna of the location determining unit and the location of the relevant manure slit member 15. With a view to the accuracy of location determining unit 59 and the required number of penetration depth measurements per metre of manure slit length, such a correction is however not always necessary.

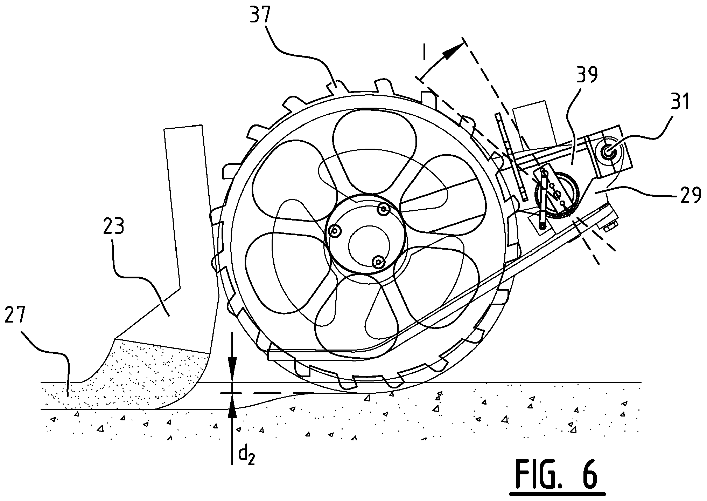

If manure slit member 15 is displaced in the direction of arrow H, i.e. in the direction out of ground 17, for instance as a result of a change in soil condition, during displacement of manure slit member 15 in the operating direction A, the situation as shown in figure 6 results. As shown, the penetration depth d₂ has decreased as a result of the displacement of manure slit member 15 in the direction of arrow H. The frame has not moved either in the shown situation.

As a result of the displacement of manure slit member 15 in the direction of arrow H, first pivot arm 29 has also rotated about rotation axis 31 in the direction of arrow H. Running wheel 37 is still in contact with ground surface 19 and has not moved in the direction of arrow H. Second pivot arm 39 has not moved in the direction of arrow H about rotation axis 31 either. First pivot arm 29 has hereby moved relative to second pivot arm 39.

This displacement has resulted in a rotation of sensor arm 49 relative to sensor unit 47 in the direction of arrow I around rotation axis 51. The difference between the values provided by sensor unit 47 in the situation shown in figure 5 and the situation shown in figure 6 is a measure for the difference between penetration depth d₁ and penetration depth d₂. The difference between the values provided by sensor unit 47 in the situation shown in figure 4 and the situation shown in figure 6 is a measure for penetration depth d₂.

Processing unit 55 is configured to determine the penetration depth d₂ on the basis of the values provided by sensor unit 47 and to store this penetration depth d₂ and the associated geographical data obtained from location determining unit 57 in storage unit 57.

In the case that the frame on which first pivot arm 29 and second pivot arm 39 are arranged is displaced relative to ground surface 19 in the direction H, first pivot arm 29 and second pivot arm 39 will undergo the same rotation around rotation axis 31 at a constant penetration depth. Because sensor unit 47 detects the relative displacement of first pivot arm 29 and second pivot arm 39, such a displacement of the frame does not influence the determination of the penetration depth d. If a displacement of the frame in the direction H does result in a change in penetration depth d, first pivot shaft 29 and second pivot shaft 39 moved relative to each other. This displacement is detected by sensor unit 47, so that processing unit 55 can determine the resulting penetration depth d as described above.

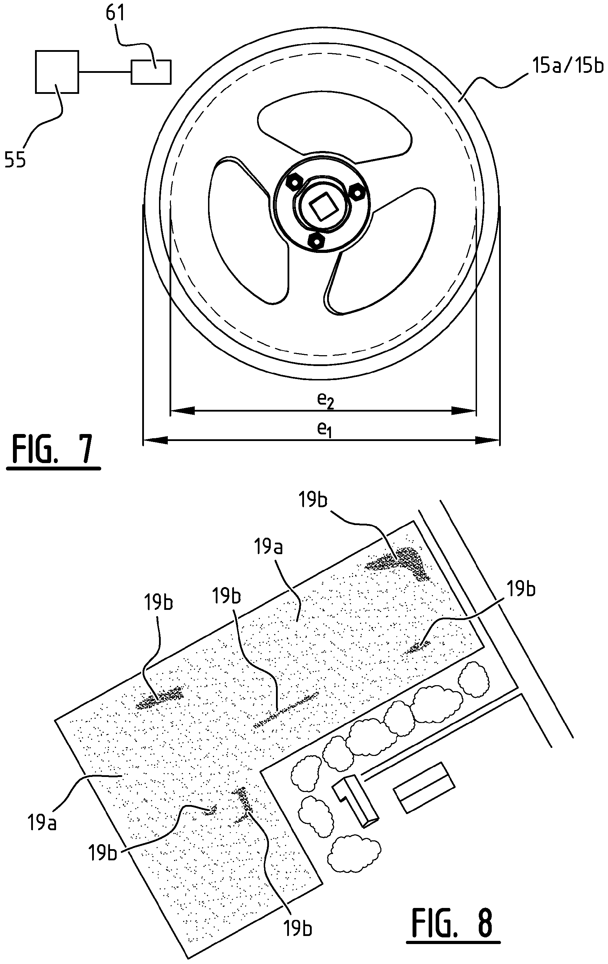

Figure 7 shows schematically that during use of coulter wheels 15a, 15b of manure slit member 15 the diameter e of coulter wheels 15a, 15b decreases in the course of time from an initial diameter e₁ to a smaller diameter e₂. This change in diameter of coulter wheels 15a, 15b has an effect on the determination of the penetration depth d of manure slit member 15 by means of processing unit 55 as described above. The change in the diameter e of coulter wheels 15a, 15b can be determined by means of a sensor unit 61, connected to processing unit 55, close to the cutting edge of coulter wheels 15a, 15b, and this change can be taken into consideration when determining the penetration depth d on the basis of values provided by sensor unit 47.

Figure 8 shows the top view of the plot of meadowland or farmland 3 of figure 1, wherein the progression of the penetration depth d is represented on the meadowland or farmland by means of a colour gradient. This representation was generated on the basis of the data relating to the penetration depth d, and the geographical data associated therewith, stored in storage unit 57. It is particularly the case in the shown representation that the part 19a of ground surface 19 of manured ground 17, where the penetration depth d is equal to or greater than a preset penetration depth, has a light colour, while the part 19b of ground surface 19 of manured ground 17, where the penetration depth d is smaller than a preset penetration depth, has a dark colour.

When the setting of the penetration depth and a corresponding dosage of manure in the manure slit are fixed during manuring, the manure slits are completely filled or underfilled in the part with a light colour, while the manure slits are overfilled with manure in the part with a dark colour. This representation is useful if the farmer wants to avoid overfilling of the manure slits. The farmer can take potential overfilling in the dark areas into consideration in the future by reducing the manure dosage or increasing the penetration depth in those areas. This latter for instance by pressing the manure slit members 15 into the ground with more force in the relevant areas.

Other representations are also possible. It is thus possible to represent the progression of the absolute value d of the penetration depth by means of a colour gradient.

The shown representation can be displayed on a screen or on paper. Processing unit 55 can generate the representation on the basis of the stored data and additional input by the farmer of the set penetration depth and the set manure dosage. For display, a screen or a printer can be connected to processing unit 55. An external data processor to which the stored data are made available can also generate and display the shown representation by means of a screen or a printer. It is likewise possible for processing unit 55 to display the penetration depth d (or the data derived therefrom, such as the deviation from a desired penetration depth) on a screen, on the basis of geographical data from location determining unit 59, during displacement of implement 1 over the meadowland or farmland for manuring thereof, immediately after the periodic determination of penetration depth d. A farmer can thus evaluate the manuring directly during the manuring and, if necessary, intervene.

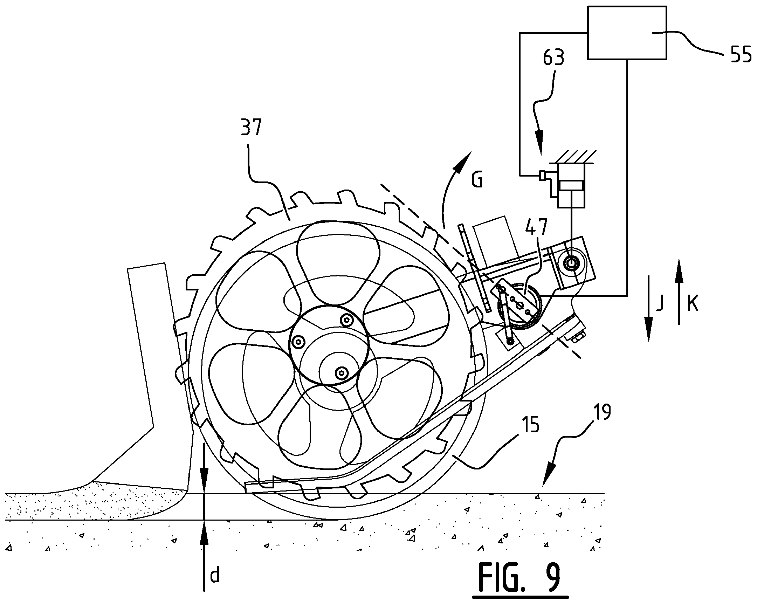

In the embodiment of a system according to the invention shown schematically in figure 9, processing unit 55 is connected to an actuator 63 configured to displace manure slit member 15 so as to insert manure slit member 15 into the ground. As shown schematically, rotation axis 31 can be displaced in the direction J toward ground surface 19 or in the direction K away from ground surface 19 by means of the actuator. With sufficient bias of the helical spring 33 shown in figures 2 and 3, manure slit member 15 is forced deeper into ground 17 during a displacement of rotation axis 31 in the direction J toward ground surface 19, so that the penetration depth d increases.

During a displacement of rotation axis 31 in the direction K away from ground surface 19, manure slit member 15 is forced into ground 17 to lesser extent so that penetration depth d decreases. Processing unit 55 is configured to control actuator 63 in order to adjust the penetration depth d of manure slit member 15 in ground 17 subject to signals obtained from sensor unit 47.

Processing unit 55 can thus for instance be configured to compare penetration depth d, after it has been determined, to a desired value of the penetration depth, and to increase or decrease the penetration depth by means of actuator 63 on the basis of this comparison. This desired value can be a stationary value which applies to the whole ground surface to be manured, or a dynamically set value which is for instance subject to the specific location on the ground surface to be manured.

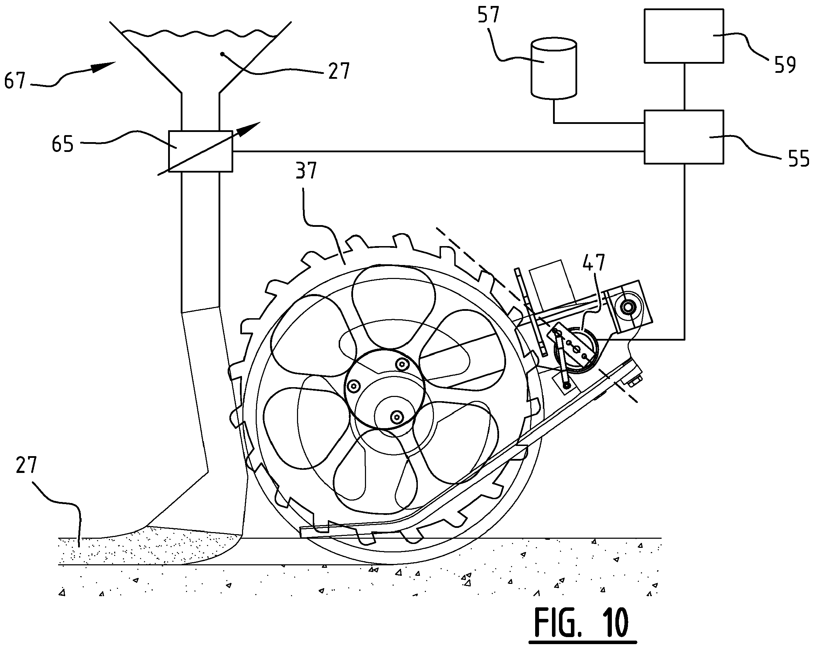

In the embodiment of a system according to the invention shown schematically in figure 10 processing unit 55 is connected to a controllable dosing member 65 of the dosing device for dosing the quantity of manure which is introduced from a manure storage tank 67, via outflow funnel 23 and into the manure slit by the dosing device.

Processing unit 55 is configured to control dosing member 65 in order to adjust the quantity of manure which is introduced into the manure slit by the dosing device subject to measurement data obtained from sensor unit 47.

Processing unit 55 can thus for instance be configured to determine, after the penetration depth d has been determined, the quantity of manure to be dosed which is needed to completely fill the manure slit, and to then control dosing member 65 such that it doses the determined quantity of manure to be dosed into the manure slit. Data relating to the driving of the quantity of manure to be dosed are optionally stored in storage unit 57 and associated with geographical data, obtained from location determining unit 59, by processing unit 55. The progression of the quantity of dosed manure can then after manuring be displayed on a representation as shown in figure 8.

The dosing device of the implement can additionally comprise an NIR (Near-Infrared) sensor configured to detect the composition of the manure, particularly to detect the nitrogen content and/or the phosphate content, this sensor being connected to the processing unit. The processing unit is then preferably configured to adjust the quantity of manure to be dosed and/or the penetration depth d subject to the detected composition of the manure. The detected composition of the manure is additionally or alternatively stored in storage unit 57 and associated with geographical data, obtained from location determining unit 59, by processing unit 55. The progression of the composition of the manure can then after manuring be displayed on a representation as shown in figure 8.

In the case of a dynamically set value for the penetration depth d, which is for instance subject to the specific location on the ground surface to be manured, it is possible by means of a combination of the adjustment of penetration depth d by means of an actuator 63 as shown in figure 9 and the adjustment of the manure dosage as shown in figure 10 to realize a location-dependent manuring on the basis of a preset progression of the desired penetration depth d or a preset progression of the desired manure dosage.

In the case of an implement 1 as shown in figure 1, with a plurality of adjacently positioned manure slit members 15, the penetration depth measurement can be applied separately for each manure slit member 15 by providing each manure slit member 15 with a depth measuring device with running wheel 37. Alternatively, not all manure slit members 15 are provided with a depth measuring device with running wheel 37. It is thus for instance possible for only one of the manure slit members 15 to be provided with a depth measuring device with running wheel 37. It can also be the case that, distributed over the total number of manure slit members 15, a smaller number of manure slit members 15 is provided with a depth measuring device with running wheel 37, for instance in each case one manure slit member per 2, 3, 4 or 5 manure slit members. Although the penetration depth is not measured for each formed manure slit in the case that not all manure slit members 15 are provided with a depth measuring device with running wheel 37, measuring the penetration depth of one or a number of the manure slit members 15 can produce sufficiently accurate data, depending on the specific object of measurement of the penetration depth.

In the case of an implement 1 as shown in figure 1, with a plurality of adjacently positioned manure slit members 15, adjustments of the penetration depth and of the manure dosage shown in figures 9 and 10 can be applied separately for each manure slit member 15 by providing each manure slit member 15 with a depth measuring device with running wheel 37, and by providing each manure slit member 15 with an actuator 63 for displacing manure slit member 15 into and out of the ground independently of the other manure slit members 15 and/or with a manure dosing member 65 for dosing manure independently of the manure dosage for the other manure slit members 15. Adjustments of the penetration depth and of the manure dosage shown in figures 9 and 10 can alternatively be provided for all the manure slit members 15 at the same time or in each case for a number of manure slit members 15 positioned close to each other.

In the figures manure slit member 15 is shown with two coulter wheels 15a, 15b. Manure slit member 15 is alternatively embodied differently, for instance as a single blade, also referred to as coulter.

In the figures the ground contact member is embodied as running wheel. Alternatively, the ground contact member is for instance a slide shoe.

In the figures the manure slit member and the ground contact member are arranged on a frame by means of pivot arms. It is alternatively possible to arrange the manure slit member fixedly on the frame and arrange only the ground contact member on the frame by means of a pivot arm. The rotation of the pivot arm relative to the frame is then a measure for the penetration depth of the manure slit member.

In the figures a rotation sensor is arranged between the pivot arms of the manure slit member and the ground contact member for determining the difference between the angular displacement of the relevant pivot arms. A linear sensor can alternatively be arranged between the relevant pivot arms instead of a rotation sensor in order to determine the difference in angular displacement.

In the figures the manure slit member and the ground contact member are arranged on a frame by means of pivot arms. The manure slit member and/or the ground contact member can alternatively be arranged on a frame by means of a different construction, for instance by means of a spring blade, a parallelogram construction, vertically shifting construction and the like.

The figures show an implement according to the invention, wherein the penetration depth of a manure slit member is measured as a measure for the manure slit depth of the manure slit formed by means of the manure slit member. It is alternatively possible to measure the manure slit depth in other manner. It is thus for instance possible to insert a separate measuring member into a manure slit in order to measure the depth of the manure slit. The penetration depth of such a separate measuring member in the manure slit can then be measured and used as a measure for the manure slit depth. Such a measuring member can for instance comprise a pivot arm which is arranged pivotally on the frame at one end and is provided at the other end with an element which is pressed under spring force into the manure slit between the manure slit member and the outflow opening of the manure dosing device. Measurement of the penetration depth of such a separate measuring member with pivot arm can take place in the same manner as measurement of the penetration depth of the manure slit member in the implement as shown in the figures.

The present invention is not limited to the above described preferred embodiments. The rights sought are defined by the following claims, within the scope of which many modifications can be envisaged.

## Claims

1. Method for introducing manure into the ground, comprising of:
- inserting a manure slit member into the ground;
- forming a manure slit in the ground by displacing along the ground surface the manure slit member inserted in the ground; and
- introducing manure into the manure slit;
**characterized by**
- measurement of the manure slit depth during displacement along the ground surface of the manure slit member inserted in the ground.

2. Method according to claim 1, wherein measurement of the manure slit depth comprises of measuring the penetration depth of the manure slit member inserted in the ground during displacement along the ground surface of the manure slit member inserted in the ground.

3. Method according to claim 1 or 2, wherein the manure slit depth is measured periodically or continuously during displacement along the ground surface of the manure slit member inserted in the ground.

4. Method according to claim 3, wherein measurement data resulting from measurement of the manure slit depth are stored.

5. Method according to any of the claims 1-4, also comprising of:
- periodically or continuously determining the geographical location of the manure slit member during displacement along the ground surface of the manure slit member inserted in the ground; and
- associating the geographical data resulting from the determination of the geographical location with the measurement data resulting from measurement of the manure slit depth.

6. Method according to claim 5, also comprising of:
- storing the measurement data resulting from measurement of the manure slit depth together with the associated geographical data resulting from the determination of the geographical location.

7. Method according to claim 5 or 6, also comprising of:
- displaying the measurement data resulting from measurement of the manure slit depth on a geographical representation of the ground surface on the basis of the geographical data associated with the depth measurement data.

8. Method according to any of the foregoing claims, also comprising during displacement along the ground surface of the manure slit member inserted in the ground of:
- adjusting the penetration depth of the manure slit member inserted in the ground subject to measurement data resulting from measurement of the manure slit depth.

9. Method according to claim 8, also comprising of obtaining data relating to the quantity of manure which is introduced into the manure slit, wherein during displacement along the ground surface of the manure slit member inserted in the ground the penetration depth of the manure slit member inserted in the ground is adjusted subject to the quantity of manure which is introduced into the manure slit and the measurement data resulting from measurement of the manure slit depth.

10. Method according to claim 9, also comprising of obtaining data relating to the composition of the manure which is introduced into the manure slit, wherein the manure dosage is adjusted subject to the data relating to the composition, preferably the nitrogen content and/or the phosphate content, of the manure which is introduced into the manure slit, and the penetration depth of the manure slit member inserted in the ground is adjusted subject to the manure dosage and the measurement data resulting from measurement of the manure slit depth.

11. Method according to any of the foregoing claims, wherein the method also comprises during displacement along the ground surface of the manure slit member inserted in the ground of:
- adjusting the quantity of manure which is introduced into the manure slit subject to measurement data resulting from measurement of the manure slit depth.

12. Method according to any of the foregoing claims, comprising of:
- obtaining data relating to the quantity of manure which is introduced into the manure slit, and
- associating the data relating to the quantity of manure which is introduced into the manure slit with the measurement data resulting from measurement of the manure slit depth.

13. Method according to claim 12, comprising of:
- storing the measurement data resulting from measurement of the manure slit depth and the associated data relating to the quantity of manure which is introduced into the manure slit.

14. Method according to claim 6 and claim 12 or 13, also comprising of:
- displaying the data relating to the quantity of manure which is introduced into the manure slit on a geographical representation of the ground surface.

15. Method according to any of the claims 12-14, also comprising of:
- calculating the degree of filling of the manure slit on the basis of the measurement data from measurement of the manure slit depth and the associated data relating to the quantity of manure which is introduced into the manure slit.

16. Method according to any of the claims 12-15, also comprising of obtaining data relating to the composition of the manure which is introduced and of associating the data relating to the composition of the manure which is introduced with the introduced quantity of manure and the depth measurement data resulting from measurement of the manure slit depth.

17. Implement for introducing manure into the ground, comprising:
- a frame displaceable along the ground surface;
- a manure slit member which is arranged on the frame and can be inserted into the ground for forming a manure slit during displacement of the frame in an operating direction;
- an outflow opening, positioned behind the manure slit member as seen in operating direction, of a manure dosing device for introducing manure into the manure slit;
**characterized by**
- a depth measuring device for measuring the manure slit depth.

18. Implement according to claim 17,
wherein
- the depth measuring device is configured to measure the penetration depth of the manure slit member inserted in the ground.

19. Implement according to claim 18,
wherein
- the depth measuring device comprises a ground contact member which is arranged on the frame, which can be brought into contact with the ground surface and which is displaceable over the ground surface during displacement of the frame along the ground surface;
- wherein the ground contact member is displaceable relative to the manure slit member during insertion of the manure slit member into the ground;
- the depth measuring device also comprises a sensor for measuring the displacement of the ground contact member relative to the manure slit member.

20. Implement according to claim 19,
wherein
- the ground contact member comprises a running wheel or a slide plate.

21. Implement according to claim 19 or 20,
wherein
- the ground contact member is positioned close to the manure slit member.

22. Implement according to any of the foregoing claims 19-21,
wherein
- the manure slit member is arranged on the frame by means of a first pivot arm which is arranged on the frame for rotation around a pivot axis;
- the ground contact member is arranged on the frame by means of a second pivot arm which is arranged on the frame for rotation around the pivot axis;
- the sensor is configured to measure the difference between the angular displacement of the first pivot arm and the angular displacement of the second pivot arm around the pivot axis.

23. Implement according to any of the foregoing claims 18-22,
also provided with a wear measuring device for measuring wear of the manure slit member.

24. Implement according to claim 23,
wherein
- the manure slit member comprises at least one coulter wheel and the wear measuring device is configured to measure the change in diameter of the coulter wheel.

25. Implement according to claim 24,
wherein
- the wear measuring device comprises an inductive sensor arranged close to the cutting edge of the coulter wheel.

26. System for introducing manure into the ground,
comprising
- an implement according to any of the claims 17-25,
- a processing unit connected to the depth measuring device for processing measurement data provided by the depth measuring device.

27. System according to claim 26,
comprising
- a location determining device connected to the processing unit for determining the geographical location of the implement, wherein the processing unit is also configured to process geographical location data provided by the location determining device.

28. System according to claim 26 or 27,
comprising
- a storage unit for storing data processed by the processing unit.

29. System according to any of the claims 26-28,
comprising
- an actuator for displacing the manure slit member in order to insert the manure slit member into the ground;
wherein
- the actuator is connected to the processing unit; and
- the processing unit is configured to control the actuator in order to adjust the penetration depth of the manure slit member in the ground subject to measurement data provided by the depth measuring device.

30. System according to any of the claims 26-29,
wherein
- the dosing device comprises a dosing member for dosing the quantity of manure which is introduced into the manure slit by the dosing device;
wherein
- the dosing member is connected to the processing unit; and
- the processing unit is configured to control the dosing member in order to adjust the quantity of manure which is introduced into the manure slit by the dosing device subject to measurement data provided by the depth measuring device.

31. System according to any of the claims 26-30, wherein the dosing device of the implement comprises a sensor, preferably an NIR (Near-Infrared) sensor, configured to detect the composition of the manure, particularly to detect the nitrogen content and/or the phosphate content, this sensor being connected to the processing unit.
